**Europäisches Patentamt**

**European Patent Office**

**Office européen des brevets**

(19)

(11) Veröffentlichungsnummer : **0 289 972 B1**

(12)  # EUROPÄISCHE PATENTSCHRIFT

(45) Veröffentlichungstag der Patentschrift :
31.07.91 Patentblatt 91/31

(51) Int. Cl.$^5$ : **A01D 78/10**

(21) Anmeldenummer : **88106984.3**

(22) Anmeldetag : **30.04.88**

(54) Heuwerbungsmaschine.

(30) Priorität : **02.05.87 DE 8706316 U**

(43) Veröffentlichungstag der Anmeldung :
**09.11.88 Patentblatt 88/45**

(45) Bekanntmachung des Hinweises auf die
Patenterteilung :
**31.07.91 Patentblatt 91/31**

(84) Benannte Vertragsstaaten :
**AT BE CH DE FR GB LI NL**

(56) Entgegenhaltungen :
**AT-B- 296 673**
**DD-A- 37 831**
**DE-U- 6 942 397**
**DE-U- 7 318 934**

(73) Patentinhaber : **GREENLAND GMBH & CO. KG**
**Erwin-Dietrich-Platz 1**
**W-7702 Gottmadingen (DE)**

(72) Erfinder : **Allwörden von, Wilhelm, Dipl.-Ing.**
**Alpenstrasse 18**
**W-7704 Gailingen (DE)**
Erfinder : **Maier, Martin**
**Hilzingerstrasse 23**
**W-7702 Gottmadingen (DE)**

(74) Vertreter : **Patentanwälte Grünecker,**
**Kinkeldey, Stockmair & Partner**
**Maximilianstrasse 58**
**W-8000 München 22 (DE)**

## Beschreibung

Die Erfindung betrifft eine an einen Schlepper anschließbare Heuwerbungsmaschine gemäß dem Oberbegriff des Patentanspruchs 1.

Bei einer aus DE-U-7318934 bekannten Heuwerbungsmaschine verfügt das als Rahmenkonstruktion ausgebildete Fahrgestell über keine ausreichende Stabilität, da die Rahmenkonstruktion als ebenes Dreieck oder Trapez ausgebildet ist, an dessen unteren Eckpunkten die Rechkreisel tragende Querausleger schwenkbar gelagert sind.

Bei einer aus der AT-B-296673 bekannten Heuwerbungsmaschine dient als Fahrgestell ein starrer Zugarm, an dem ein die beiden Rechkreisel tragender, starrer Quertragbalken mit einer vertikalen Schwenkachse angelenkt ist. Am Tragbalken ist ein Hilfsrahmen für das Erntegut steuernde Hilfsmittel angebracht.

Bei einer aus der DE-U-6942397 bekannten Heuwerbungsmaschine ist das Fahrgestell T-förmig ausgebildet. Schutzvorrichtungen für die Rechkreisel sind um in Fahrtrichtung liegende Achsen schwenkbar an dem die Rechkreisel tragenden Quertragbalken gelagert.

Der Erfindung liegt die Aufgabe zugrunde, eine Heuwerbungsmaschine der eingangs genannten Art zu schaffen, die sich durch ein stabiles, unfallsicheres und mit lediglich geringfügigen Änderungen sowohl für einen Zug- als auch Schiebebetrieb verwendbares Fahrgestell auszeichnet.

Die gestellte Aufgabe wird mit den im kennzeichnenden Teil des Patentanspruchs 1 angegebenen Merkmalen gelöst.

Weitere, besonders vorteilhafte bauliche Merkmale sind den Unteransprüchen 2 und 3 zu entnehmen.

Die Neuerung wird nachfolgend anhand der Zeichnungen näher erläutert. Es zeigen :

Figur 1 die Draufsicht auf eine gezogene Heuwerbungsmaschine ;

Figur 2 die Draufsicht auf eine geschobene Heuwerbungsmaschine.

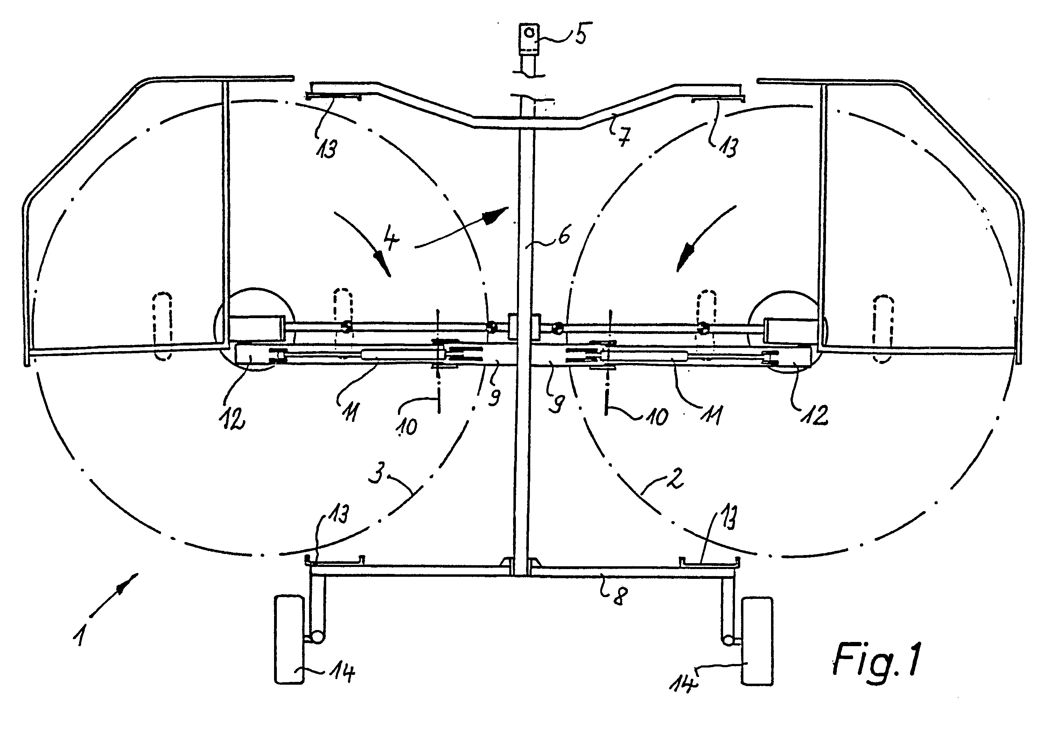

Bei der in Figur 1 in schematischer Draufsicht dargestellten Heuwerbungsmaschine 1 handelt es sich um einen Kreiselschwader mit zwei Rechkreiseln 2 und 3, die an ein Fahrgestell 4 angeschlossen sind. Das Fahrgestell 4 kann über eine Zugdeichsel 5 an einen selbst nicht dargestellten Schlepper angehängt werden.

Das Fahrgestell 4 hat die Form eines Doppel-T, das heisst es verfügt über einen in Fahrtrichtung weisenden Längsträger 6, an den ein vorderer Querträger 7 und ein rückwärtiger Querträger 8 angeschlossen ist.

Der vordere bzw. rückwärtige Querträger 7, 8 kann einstückig ausgebildet und mit dem Träger verschraubt sein bzw. auch aus zwei Teilen bestehen, die am Längsträger 6 festgeschraubt werden.

Die Länge der Querträger 7 + 8 entspricht etwa dem Achsabstand der Rechkreisel 2 und 3.

Etwa mittig vom Längsträger 6 sind beidseitig schräg nach unten weisende Ausleger 9 vorgesehen. Die freien Enden dieser Ausleger 9 nehmen in Fahrtrichtung weisende Schwenkachsen 10 auf, um die die Rechräder 2 und 3 mit Hilfe von Hydraulikzylindern 11, die kolbenstangenseitig an Tragarmen 12 der Rechräder 2 und 3 angelenkt sind, in eine um 90° nach oben und innen weisende Transportlage einschwenkbar sind. Die Zinken der Rechräder 2 und 3 werden in dieser Transportlage durch Warntafeln 13, die etwa in den Eckpunkten des Doppel-T-förmigen Fahrgestells vorgesehen sind, zumindest teilweise abgedeckt, so dass eine Quelle möglicher Unfälle ausgeschaltet ist.

Bei der gezogenen Heuwerbungsmaschine nach Figur 1 ist das Fahrgestell 4 an rückwärtigen Querträger 8 über zusätzliche Laufräder 14 auf dem Boden abgestützt. Mit dieser Massnahme ist eine separate Führung des Fahrgestells — unabhängig von den ebenfalls vorhandenen Läufrädern der Rechkreisel 2 und 3 — gewährleistet.

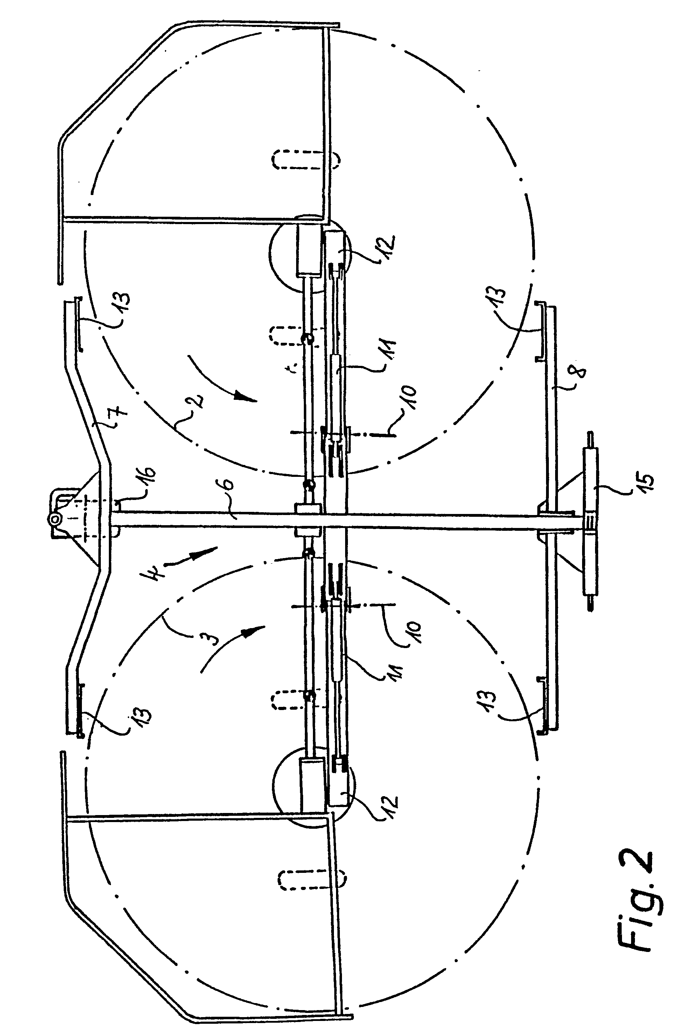

Bei der Heuwerbungsmaschine, die in Figur 2 schematisch dargestellt ist, handelt es sich um eine Konstruktion, bei der die gleiche Grundmaschine Verwendung findet. Demzufolge weisen gleiche Teile gleiche Bezugsziffern auf.

Das Fahrgestell 4 ist gegenüber der vorstehend erläuterten Konstruktion so geändert, dass die Heuwerbungsmaschine von dem selbst nicht dargestellten Schlepper geschoben wird. Zum Anschluss der Heuwerbungsmaschine ist der rückwärtige Querträger 8 mit einem Anschlussrahmen 15 versehen.

Der vordere Querträger 7 trägt ein mittig zum Längsträger 6 schwenkbar angeordnetes Nachlaufrad 16, mit dem das Fahrgestell 4 zusätzlich auf der Bodenoberfläche abgestützt wird.

## Patentansprüche

1. An einen Schlepper anschließbare Heuwerbungsmaschine (1), insbesondere Kreiselschwader, mit einem Fahrgestell (4), an dem zwei, Laufräder aufweisende Rechkreisel (2, 3) um je eine horizontale, in Fahrtrichtung liegende Schwenkachse (10) in eine Transportstellung um 90° hoschschwenkbar angeordnet sind, **dadurch gekennzeichnet**, daß — in Draufsicht auf die Heuwerbungsmaschine (1) — das Fahrgestell (4) mit einem in Fahrtrichtung verlaufenden Längsträger (6) und einem in Fahrtrichtung vorderen und einem hinteren Querträger (7, 8) die Form eines Doppel-T aufweist, daß die Rechkreisel (2, 3) am Längsträger (6) beidseitig etwa mittig angelenkt sind, daß die Querträger (7, 8) eine etwa dem Achsabstand der Rechkreisel (2, 3) entsprechende Länge aufweisen, daß an den Querträgern (7, 8) Warntafeln (13) angeordnet sind, daß am Längsträger (6) Mittel (5, 15) zum Anschließen des Fahrgestells (4) an den Schlepper angeordnet sind, und daß am Fahrgestell (4) mindestens ein Laufrad (14, 16) vorgesehen ist.

2. An einen Schlepper anschließbare Heuwerbungsmaschine (1) nach Anspruch 1, **dadurch gekennzeichnet**, daß am in Schiebefahrtrichtung vorderen Ende des Längsträgers (6) ein Laufrad (16), vorzugsweise ein Nachlaufrad, angeordnet ist, und daß am in Schiebefahrtrichtung rückwärtigen Ende des Längsträgers (6) als Mittel (15) zum Anschließen des Fahrgestells (4) an den Schlepper ein Anschlußrahmen befestigt ist.

3. An einen Schlepper anschließbare Heuwerbungsmaschine (1) nach Anspruch 1, **dadurch gekennzeichnet**, daß am in Zugfahrtrichtung vorderen Teil des Längsträgers (6) als Mittel (5) zum Anschließen des Fahrgestells (4) an den Schlepper eine Zugdeichsel angeordnet ist, und daß an dem am rückwärtigen Ende des Längsträgers (6) befestigten Querträger (8) zwei Laufräder (14) vorgesehen sind.

## Claims

1. A haymaking machine (1), connectable to a tractor, particularly a rotary swath mower with a chassis (4), on which two rotary rakes (2, 3) having groundwheels are arranged to swivel upwards through 90° into a transport position around a horizontal swivelling axis (10) in each case lying in the direction of travel, characterised in that—seen in plan view on the haymaking machine (1)—the chassis (4), with a longitudinal carrier (6) extending in the direction of travel and with a forward and rear transverse carriers (7, 8) has the forme of a double 'T', that the rotary rakes (2, 3) are articulated approximately at the middle and on both sides of the longitudinal carrier (6), that the transverse carriers (7, 8) are of a length corresponding roughly to the distance between the axes of the rotary rakes (2, 3), that there are disposed on the transverse carriers (7, 8) warning plates (13), that there are disposed on the longitudinal carrier (6) means (5, 15) of connecting the chassis (4) to the tractor, and that there is provided on the chassis (4) at least one groundwheel (14, 16).

2. A haymaking machine (1) connectable to a tractor according to Claim 1, characterised in that there is disposed on the forward end, in the direction of pushed travel, of the longitudinal carrier (6) a groundwheel (16), preferably a follower wheel, and that there is attached, on the rear end in the direction of pushed travel of the longitudinal carrier (6), a connector frame as means (15) of connecting the chassis (4) to the tractor.

3. A haymaking machine (1) connectable to a tractor according to Claim 1, characterised in that there is disposed on the forward portion of the longitudinal carrier (6) in the direction of drawn travel, a drawbar as means (5) of connecting the chassis (4) to the tractor, and that there are provided on the transverse carrier (8), attached to the rear end of the longitudinal carrier (6), two groundwheels (14).

## Revendications

1. Machine de fenaison (1), notamment andaineuse rotative, susceptible d'être accouplée à un tracteur et comprenant un châssis (4) sur lequel sont disposés deux rateaux rotatifs (2, 3) comportant des roues de déplacement et susceptibles de pivoter sur 90° dans une position de transport, chacun autour d'un axe de pivotement (10) horizontal et orienté dans le sens du déplacement, caractérisée en ce que, dans une vue de dessus de la machine de fenaison (1), le châssis (4) avec un longeron (6) s'étendant dans le sens du déplacement et des poutres transversales (7, 8) avant et arrière, présente la forme d'un double T, que les rateaux rotatifs (2, 3) sont articulés au longeron (6) de part et d'autre, approximativement au milieu, que les poutres transversales (7, 8) présentent une longueur correspondant sensiblement au distance à l'entre-axe des rateaux rotatifs (2, 3), que des panneaux d'avertissement (13) sont disposés aux poutres transversales (7, 8), que des moyens (5, 15) pour l'accouplement du châssis (4) au tracteur sont prévus au longeron (6) et en ce qu'au moins une roue de déplacement (14, 16) est prévue sur le châssis (4).

2. Machine de fenaison (1) susceptible d'être accouplée à un tracteur, selon la revendication 1, caractérisée en ce qu'à l'extrémité avant du longeron (6), dans la direction de déplacement par poussée, est disposée une roue de déplacement (16), avantageusement une roue de poursuite, et en ce qu'à l'extrémité arrière du longeron (6), dans le sens du déplacement par poussée, est fixé un cadre d'accouplement comme moyen (15) pour accoupler le châssis (4) au tracteur.

3. Machine de fenaison (1) susceptible d'être accouplée à un tracteur, selon la revendication 1, caractérisée en ce qu'à la partie avant du longeron (6), dans le sens du déplacement par traction, est disposée une barre d'attelage comme moyen (5) pour l'accouplement du châssis (4) au tracteur et en ce que deux roues de déplacement (14) sont prévues à la poutre transversale (8) fixée à l'extrémité arrière du longeron (6).

Fig.1

EP 0 289 972 B1

Fig. 2

EP 0 289 972 B1